# EUROPEAN PATENT APPLICATION

(11) **EP 4 350 582 A1**
(43) Date of publication of application: **10.04.2024**
(21) Application number: 23186647.6
(22) Date of filing: 20.07.2023
(51) Int. Cl.: G06N 5/022, G06N 20/00, G06Q 40/03, G06N 5/045

(54) **MACHINE LEARNING PROGRAM, MACHINE LEARNING METHOD, AND INFORMATION PROCESSING APPARATUS**

(30) Priority: 06.10.2022 JP 2022161752
(71) Applicant: FUJITSU LIMITED, Kawasaki-shi, Kanagawa 211-8588 (JP)
(72) Inventor: IWAKURA, Satoko, Kawasaki-shi, Kanagawa, 211-8588 (JP); NITTA, Izumi, Kawasaki-shi, Kanagawa, 211-8588 (JP); OHASHI, Kyoko, Kawasaki-shi, Kanagawa, 211-8588 (JP)
(74) Representative: Hoffmann Eitle

(57) **Abstract**

A machine learning program is executable by one or more computers and includes: an instruction for comparing a first plurality of relationship information pieces with a second plurality of relationship information pieces, the first plurality of relationship information pieces being determined in terms of an inputted configuration of a first Artificial Intelligence (Al) system and each including a plurality of attributes, the second plurality of relationship information pieces being determined in terms of a second AI system; an instruction for determining priorities of the first plurality of relationship information pieces, the priorities being based on a result of the comparing; and an instruction for outputting, as a checklist of the first AI system, one or more check items selected in accordance with the determined priorities from among a plurality of check items associated with the plurality of attributes.

## Description

### [Technical Field]

The embodiment discussed herein relates to a machine learning program, a machine learning method, and an information processing apparatus.

### [Background Technique]

An Artificial Intelligence (AI) system sometimes involves an ethical risk assessment.

The use of AI systems in various industries and tasks may cause ethical problems. If such a problem arises, not only the company and the organization that provided the AI systems but also the users of the AI system and the community ahead thereof would be largely affected.

For the above, in the social implementation of AI, efforts are being made to recognize and deal with ethical risks.

However, if an AI system involves multiple stakeholders and the social circumference around the stakeholders changes, it may be not easy to detect what ethical problems are caused by use of the AI system.

As a solution to the above, a checklist indicated by the principles and the guidelines related to AI ethics is sometimes applied to an AI system and the stakeholders thereof and analyzed.

Examples of the principles and the guidelines related to AI ethics are "Ethics Guidelines for Trustworthy AI" of "European High-Level Expert Group on AI (AI HLEG)", "AI Use Guidelines of the Ministry of Internal Affairs and Communications", ""Human-Centered AI social principles" of the Integrated Innovation Strategy Promotion Council", and OECD "Recommendation of the Council on Artificial Intelligence".

In addition, a "Risk Chain Model (RC Model) has been proposed as a model contributing to risk control examination on the own AI service by an AI service provider, considering the presence of various manners of providing AI services.

In a risk chain model, the risk components are organized and structured according to the following components (1) to (3).
(1) Technical components of an AI system;
(2) Components pertaining to the Code of Conduct of a service provider (including communication with users); and
(3) Components pertaining to understanding, behavior, and usage environment of users.

In the risk chain model, risk scenarios are identified, components to be risk factors are specified, a risk chain is visualized, and a risk control is examined. In the visualization of a risk chain and the examination of risk control, an AI service provider visualizes the relationship (risk chain) of the components related to the risk scenarios, and thereby enables the examination of the stepwise risk reduction.

### [Prior Art Reference]

### [Patent Document]

[Patent Document 1] International Publication Pamphlet NO. WO2020/240981
[Patent Document 2] International Publication Pamphlet NO. WO2021/084810
[Patent Document 3] US Patent Application Publication No. 2020/0372374
[Patent Document 4] US Patent Application Publication No. 2021/0271885

### [Non-Patent Document]

[Non-Patent Document 1] Takashi MATSUMOTO, Arisa EMA, "RCModel, a Risk Chain Model for Risk Reduction in AI Services", July 6, 2020, Internet <URL: ifi.u-tokyo.ac.jp/en/news/4815/>

### [Summary of Invention]

### [Problems to be Solved by Invention]

However, a checklist indicated by the principles and the guidelines does not specifically indicate what part of an AI system needs to be, and AI system developers and providers have to embody this need. This embodying work has a high degree of difficulty and needs large load to accomplish the process.

Risk components of a risk chain mode is organized, but AI system providers and developers need to adapt these components into components that the AI system and each individual stakeholder need to implement.

Furthermore, if the configuration of an AI system is updated, the ethical risks that may arise in the course of the operation of the AI system need to be reexamined, so that there is a possibility that the ethical risks are not recognized efficiently.

According to an aspect, one of the objects of the embodiment is to help a developer and a provider of an AI system to appropriately recognize and deal with an ethical risk that is likely occur in the operation of AI system.

### [Means to Solve Problems]

According to an aspect of the embodiment, a machine learning program is executable by one or more computers and includes: an instruction for comparing a first plurality of relationship information pieces with a second plurality of relationship information pieces, the first plurality of relationship information pieces being determined in terms of an inputted configuration of a first Artificial Intelligence (AI) system and each including a plurality of attributes, the second plurality of relationship information pieces being determined in terms of a second AI system; an instruction for determining priorities of the first plurality of relationship information pieces, the priorities being based on a result of the comparing; and an instruction for outputting, as a checklist of the first AI system, one or more check items selected in accordance with the determined priorities from among a plurality of check items associated with the plurality of attributes.

### [Effect of Invention]

In one aspect, the disclosed technique can help AI system developers and providers to appropriately recognize and deal with ethical risks that may arise from operation of the AI system.

### [Brief Description of Drawings]

FIG. 1 is a block diagram illustrating an analysis diagram serving an output data according to a related example;
FIG. 2 is a block diagram illustrating an analysis target system diagram of the related example;
FIG. 3 is a table illustrating an excerpt part of an AI ethic checklist of the related example;
FIG. 4 is a table illustrating an excerpt part of an analysis sheet of the related example;
FIG. 5 is a block diagram illustrating an example of generating a graph structure from the analysis sheet of the related example;
FIG. 6 is a block diagram illustrating an example of extracting an AI ethic check item of the related example;
FIG. 7 is a block diagram schematically illustrating an example of a software configuration of an information processing apparatus of the related example;
FIG. 8 is a flow diagram illustrating a process of generating an AI ethic checklist of the related example;
FIG. 9 is a flow diagram illustrating a process of generating an AI ethic checklist of an embodiment;
FIG. 10 is a diagram illustrating a first example of difference detecting process and a significance addition process of the embodiment;
FIG. 11 is a diagram illustrating a second example of the difference detecting process and the significance addition process of the embodiment;
FIG. 12 is a diagram illustrating a graph structure;
FIG. 13 is a diagram illustrating a first specific example of the difference detecting process of the embodiment;
FIG. 14 is a diagram illustrating a second specific example of the difference detecting process of the embodiment;
FIG. 15 is a diagram illustrating a third specific example of the difference detecting process of the embodiment;
FIG. 16 is a diagram illustrating a fourth specific example of the difference detecting process of the embodiment;
FIG. 17 is a diagram schematically illustrating an example of a software configuration of an information processing apparatus of the embodiment; and
FIG. 18 is a diagram schematically illustrating an example of a hardware configuration of the information processing apparatus of the embodiment.

### [Description Of Embodiment(S)]

### (A) Related Example:

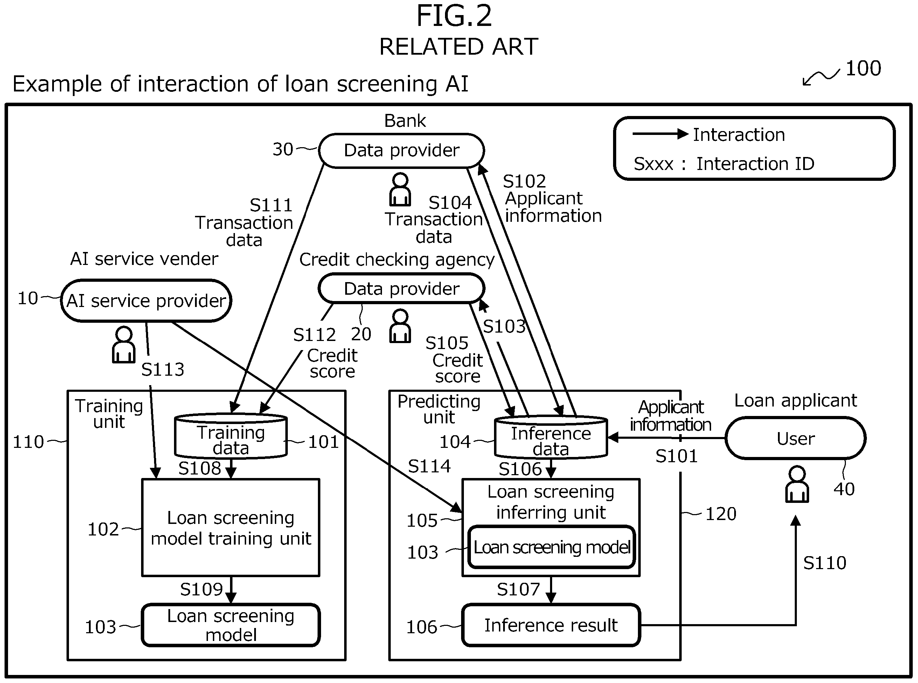

The related example generates a checklist of ethic features that an AI system 100 (to be described below with reference to FIG. 2) needs to possess in association with the relationships between the AI system 100 and stakeholders, and analyzes ethical risks of the AI system 100, using the AI ethic checklist. This eliminates the need for an AI service provider 10 (to be described below with reference to FIG. 2) and developers to adapt these components into components that the AI system 100 and each individual stakeholder need to implement.

In addition, the relationship between the components of the AI system 100 and the stakeholders are made into a graph structure, and an AI ethic checklist prioritized for AI ethic check items based on the features of the graph structure is automatically generated. This makes it possible to more efficient generate the AI ethic checklist by preferentially analyzing the significant AI ethic check items.

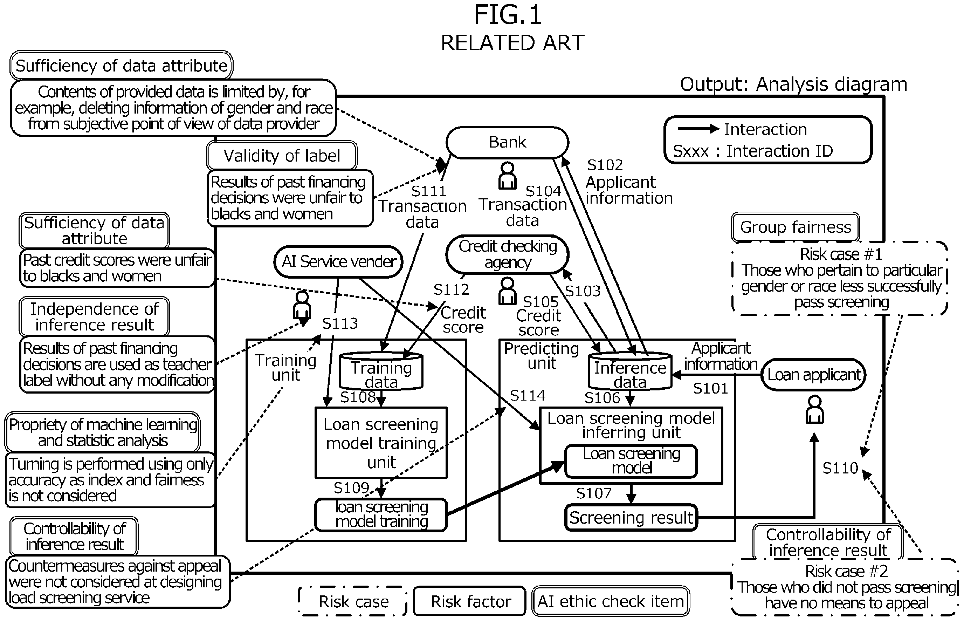

FIG. 1 is a block diagram illustrating an analysis diagram serving an output data according to the related example.

The ethical risks surrounding AI are extracted and visualized in association with the relationships (interactions) between AI system components and stakeholders.

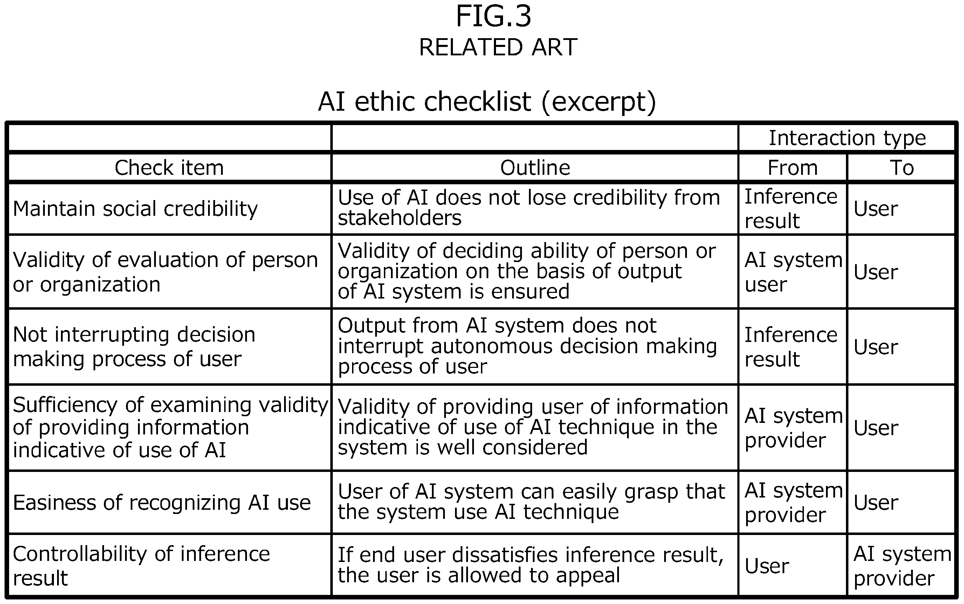

In the analysis diagram illustrated in FIG. 1, if the corresponding AI ethic check items (to be described in FIG. 3) to the respective interaction IDs (S101 to S114) displayed in the system diagram including a training unit 110 and a predicting unit 120 (to be described below with reference to FIG.2) are present, the interactions and the AI ethic check items are displayed in association with each other. In addition, in each AI ethic check item and either one of a risk event (see the dashed-dotted line frame in FIG. 1) and a risk factor (see the dotted line frame in FIG. 1) are displayed in association with each other.

In Example of FIG. 1, S110 is displayed in association with a risk event "Those who pertain to particular gender or race less successfully pass screening" of an AI ethic check Item "group fairness". In addition, S100 is displayed in association with a risk event "Those who did not pass screening have no means to appeal" of an AI ethic check Item "controllability of inference result". S111 is displayed in association with AI ethic check items "sufficiency of data attribute" and "validity of label". S112 is displayed in association with an AI ethic check Item "sufficiency of data attribute", and S113 is displayed in association with AI ethic check Items "independence of inference result" and "propriety of machine learning and statistic analysis". S114 is displayed in association with an AI ethic check Item "controllability of inference result".

FIG. 2 is a block diagram illustrating an analysis target system diagram of the related example.

An AI system 100 illustrated in FIG. 2 illustrates an example of interactions of the loan screening AI. The arrows in FIG. 2 indicate interactions. The both ends (start and end points) of each interaction are any elements of a stakeholder, data and a component of an AI system. The type of an interaction is determined in terms of the roles (e.g., data providers 20, 30, a user 40, training data 101, loan screening model 103) of elements corresponding to the start and end points of an interaction. The reference sign "Sxxx" attached to each interaction indicates an interaction ID.

The AI system 100 is used by an AI service provider 10 such as an AI service vendor, a data provider 20 such as a credit checking agent, a data provider 30 such as a bank, and a user 40 such as a loan applicant.

The training unit 110 includes a loan screening model training unit 102 (in other words, a machine learning unit) that trains a loan screening model 103 (in other words, an AI model) by machine-learning the training data 101. The training data 101 may be generated by inputting a credit score from the data provider 20 and/or inputting transaction data from the data provider 30.

The predicting unit 120 includes an inferring unit 105 that outputs a screening result 106 (in other words, inference result) by inferring inference data 104 using the loan screening model 103. The inference data 104 may be generated by inputting and outputting a credit score from the data provider 20, inputting and outputting application information and transaction data from the data provider 30, and inputting the applicant information from the user 40.

FIG. 3 is a table illustrating an excerpt part of an AI ethic checklist of the related example.

The AI ethic checklist is generated on the basis of the AI ethic model. The AI ethic model is configured as a list containing check items that the AI system 100 needs to satisfy by organizing the principles and guidelines related to the AI ethic.

The AI ethic checklist associates each type of interaction in FIG. 2 with an AI ethic check item to be satisfied according. One check item in the AI ethic checklist corresponds to one type of interaction.

An excerpt part of an AI ethic check list illustrated in FIG. 3 is based on an AI ethic model derived from" "Ethics Guidelines for Trustworthy AI" of "European High-Level Expert Group on AI (AI HLEG)".

In the excerpt part of an AI ethic checklist of FIG. 3, a check item, an outline, and an interaction type (From,To) are associated with one other. For example, the check item "Maintenance of social credibility" is registered in association with the outline "Use of AI does not lose credibility from stakeholders" and the interaction type (From) "inference result" and the interaction type (To) "user".

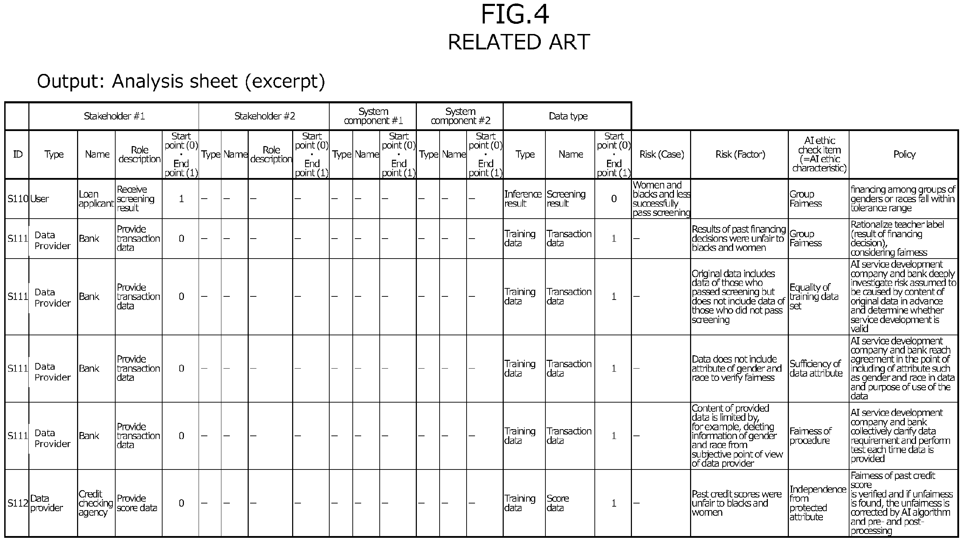

FIG. 4 is a table illustrating an excerpt part of an analysis sheet of the related example.

In an analysis sheet, a stakeholder, a data type, a risk, an AI ethic check item (AI ethic characteristic), and a policy are associated with one another. For example, a stakeholder type "user", a name "loan applicant", and discrimination of start/end point "1 (end point)" are associated with one another for an interaction ID "S110". In addition, a data type "inference result", a data name "screening result", and discrimination of start/end point "0 (start point)" are associated with one another for an interaction ID "S110". Furthermore, for the Interaction ID "S110", a risk (case) "women and blacks less successfully pass screening" and an AI check item "group fairness", and a policy "improve AI algorithm such that differences of ratio of passing financing among groups of genders or races fall within tolerance range" are associated with each other.

Here, description will now be made in relation to an analyzing process of an AI ethical risk.

A risk analysis is performed by the user in the procedural Steps (1) to (4) as follows.
(1) The relationship among the components, the data, and the stakeholders of the AI system 100 are plotted into a system diagram (see FIG. 2) and the interactions are extracted.
(2) The contents of each interaction are described in the analysis sheet (see FIG. 4).
(3) For each item of the AI ethic checklist (see FIG. 3), a risk (risk event, risk factor) assumed from a state where the corresponding interaction does not satisfy the check item thereof is extracted and described in the analysis sheet.
(4) By referring to the risks in the analysis sheet, the same contents are organized, and the relationship between a case and a factor is described. When the risk analysis is to be visualized, an analysis drawing (see FIG. 1) additionally includes a risk event and factor to the system diagram are generated.

This means that the system diagram, the analysis sheet, and the analysis diagram are output as output data.

In Step (3) of the above risk analysis, since the AI ethic checklist has many items, the load of a process to verify all the items in the checklist is large. Therefore, in the procedural Step (3) in the above risk analysis, a generating process of a prioritized AI ethic checklist is executed.

In the generating process of a prioritized AI ethic checklist, the relationship (interaction) between the AI system 100 serving as an analysis target and a stakeholder is expressed in a graph structure. Then, from the features of the graph structure, highly significant relationship (interaction) being ethically noteworthy is extracted on a rule basis, and a check item for extracting an ethical risk associated with highly significant relationship (interaction) is presented as a prioritized checklist.

The information processing apparatus (not illustrated) in the related Example narrows the contents of the AI ethic checklist. In narrowing the contents of the AI ethic checklist, the features that "the relationship between the configuration of the AI system and the stakeholder" has are expressed as the features of a graph structure composed of a group of interactions.

The table data of the analysis sheet is in data format of "interaction group", which can automatically generate a graph structure. For example, the following items can be automatically extracted as the feature of the graph structure:
- the number of nodes of stakeholders
- the number of stakeholders each having multiple roles
- the number of stakeholders not being directly related to AI system

A feature of a graph structure that is likely to cause an ethical risk and an item of AI ethic checklist that needs caution are registered in advance as rules. For example, if one or more stakeholders not directly related to the AI system 100 are present, the priorities of interactions that stakeholders relate to are raised. This is to grasp the impacts on indirect stakeholders that tend to be missed in designing and developing the AI system 100.

On the basis of the rules registered from the feature of the graph structure, the AI ethic check items are narrowed to highly significant AI ethic check items, which are generated into the prioritized AI ethic checklist.

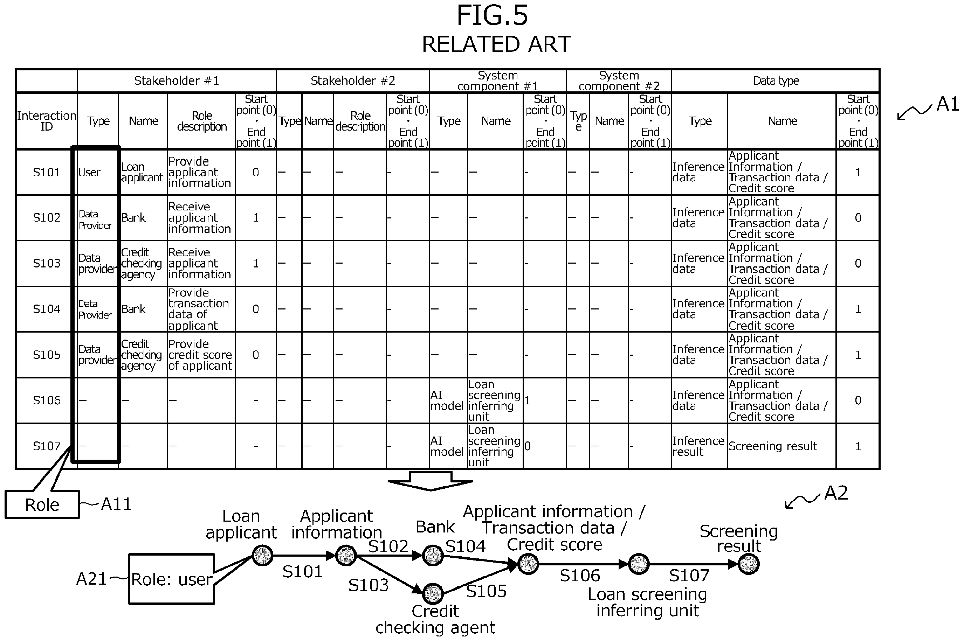

FIG. 5 is a block diagram illustrating an example of generating a graph structure from the analysis sheet of the related example.

The analysis sheet indicated by the reference sign A1 has the same table structure as that of the analysis sheet of FIG. 4. From the analysis sheet illustrated in the reference sign A1, a graph structure as indicated by the reference sign A2 may be generated.

In the graph structure indicate by the reference sign A2, arrows between the nodes indicated by circles represent interactions.

In the example of FIG. 5, the output of applicant information from a loan applicant is represented by S101, the input of the applicant information into a bank is represented by S102, and the input of the applicant information into a credit checking agency is represented by S103. In addition, the output of the applicant information, transaction data, and a credit score from the bank is represented by S104, and the output of the applicant information, the transaction data, and the credit score from the credit checking agency is represented by S105. Furthermore, the input from the applicant information, the transaction data, and a credit score into the loan screening inferring unit is represented by S106, and the output of screening data from the loan screening inferring unit is represented by S107.

As indicated by the reference sign A11, roles (types of stakeholders) are registered to the respective stakeholders, and as indicated by the reference sign A21, each node, such as the loan applicant, has a role.

Here, the highly significant noteworthy interactions are extracted in the following order of (1) to (3).
(1) The score point of significance of every interaction is set to one.
(2) The score point of significance of an interaction having a particular feature is incremented (by one point may be added per feature).
(3) Interactions are ranked by significance.

The particular feature in the above (2) may include features of the nodes (components of the AI system 100, data, stakeholders) at both ends of each interaction and a feature of the connection. The features of the nodes at both ends of each interaction may include a stakeholder with multiple roles (the AI system provider and also the data provider), a stakeholder with a role of a user, and a stakeholder with the role of a training data provider. The feature of a connection may include an interaction of a stakeholder that is not connected to an output of the AI system 100, and an interaction in which the

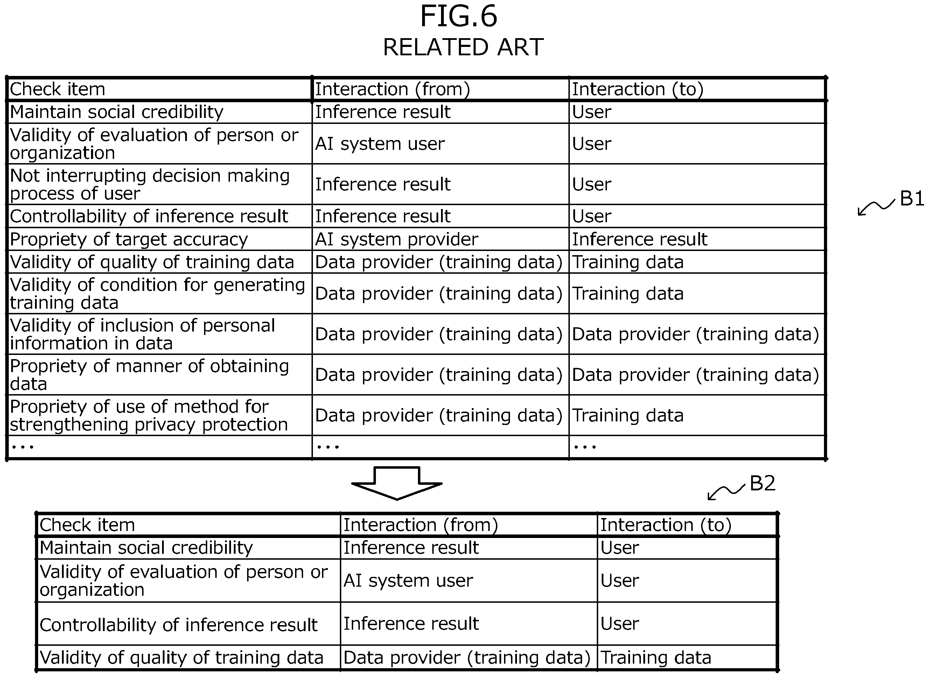

FIG. 6 is a block diagram illustrating an example of extracting an AI ethic checking item of the related example.

In the order of interactions having higher score points of significance, the corresponding AI ethic check items are aligned.

In Example illustrated in FIG. 6, from among AI ethic check items indicated by the reference sign B1, four AI ethic check items having the higher score points of significance are extracted and aligned as indicated by the reference sign B2.

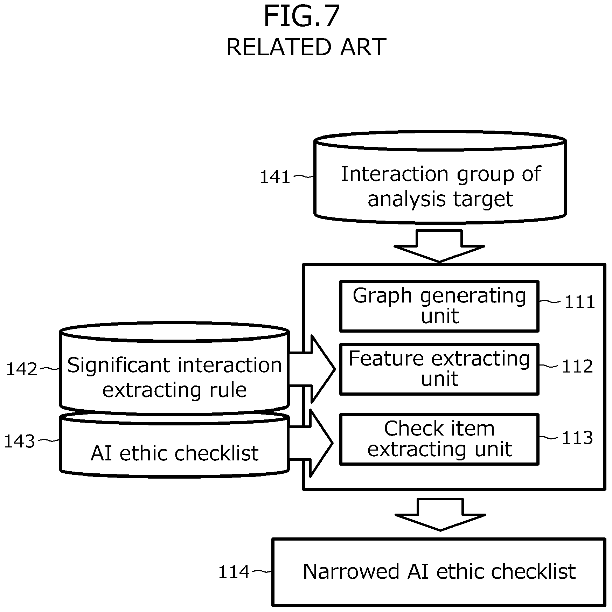

FIG. 7 is a block diagram schematically illustrating an example of a software configuration of an information processing apparatus of the related example.

The information processing apparatus (not illustrated) in the related example functions as a graph generating unit 111, a feature extracting unit 112, and a check item extracting unit 113.

The graph generating unit 111 obtains multiple relationship information pieces (in other words, interactions) including at least two attributes among the attribute of the type of a target person, the attribute of the type of a process, and the attribute of the type of data determined on the basis of the configuration of the AI system 100. The graph generating unit 111 may obtain relationship information on the basis of an interaction group 141 of an analysis target. The graph generating unit 111 may generate the graph structure illustrated in FIG. 5 on the basis the obtained relationship information.

The feature extracting unit 112 determines priorities of the multiple relationship information based on the attribute of the type of the target person. The feature extracting unit 112 may determine the priorities based on a significant interaction extracting rule 142. The feature extracting unit 112 may heighten the priority of a particular target person associated with each of the multiple pieces of the relationship information. The feature extracting unit 112 may heighten the priority of a particular piece among the multiple pieces of the relationship information.

The check item extracting unit 113 outputs, as a narrowed AI ethic checklist 114 of the AI system 100, one or more check items selected on the basis of the determined priorities from among the multiple check items associated with the respective attributes.

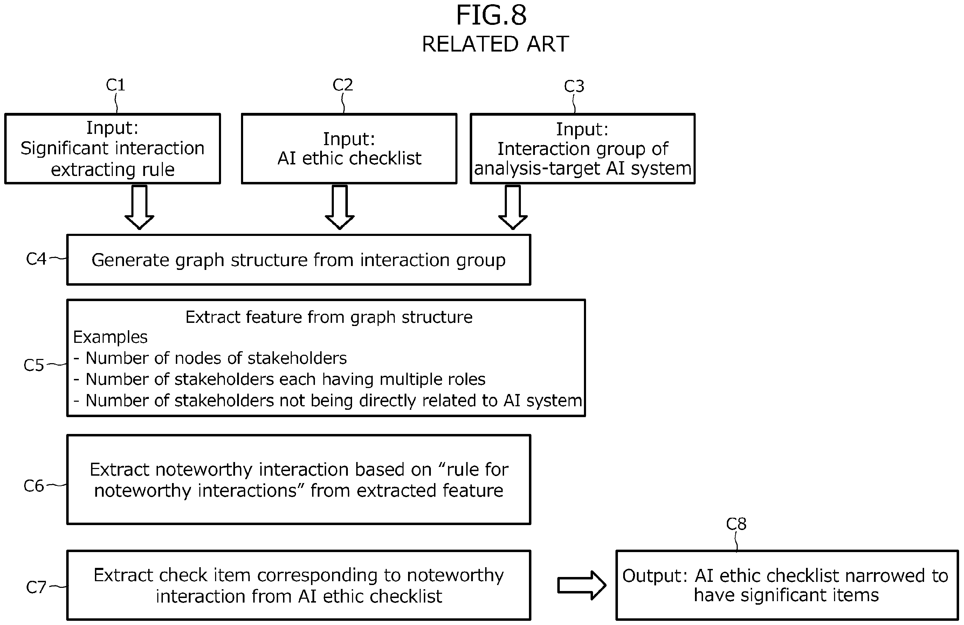

Next, detailed description will now be made in relation to a generating process of an AI ethic checklist in the related example with reference to a flow diagram (Steps C1 to C8) of FIG. 8.

The graph generating unit 111 receives a significant interaction extracting rule 142, an AI ethic checklist 143, and an interaction group 141 of an analysis target as the input data (Steps C1 to C3).

The graph generating unit 111 generates a graph structure from the interaction group 141 (Step C4).

The feature extracting unit 112 extracts a feature from the graph structure (Step C5). A feature may be extracted based on, for example, the number of nodes of stakeholders, the number of stakeholders each having multiple roles, and the number of stakeholders not being directly related to the AI system 100.

The feature extracting unit 112 extracts a noteworthy interaction based on the significant interaction extracting rule 142 from the extracted feature (Step C6).

The check item extracting unit 113 extracts the check item of the AI ethic checklist 143 corresponding to the noteworthy interaction (Step C7).

The check item extracting unit 113 outputs an AI ethic checklist 143 narrowed to have only significant items (Step C8). Then, the generating process of the AI ethic checklist 143 ends.

### (B) Embodiment:

Hereinafter, one embodiment will now be described with reference to the accompanying drawings. However, the following embodiment is merely illustrative and there is no intention to exclude the application of various modifications and techniques not explicitly described in the embodiment. Namely, the present embodiment can be variously modified and implemented without departing from the scope thereof. Further, each of the drawings can include additional functions not illustrated therein to the elements illustrated in the drawing.

In the generating process of the AI ethic checklist in the related example described above, the AI ethic checklist is narrowed by providing priorities to the interactions according to the rules of the features of the graph structure (for example, the features related to the roles of stakeholders) of significant interactions which are likely to generate an ethical risk. In contrast, the present embodiment provides the priorities to the interactions according to the difference between the graph structure of the current system diagram and the graph structure of the system diagram of the previous version in addition to or in place of the features of the graph structure being regarded as significant interactions which are likely to generate an ethical risk. If an AI system that has executed an ethical risk analysis in the past undergoes a change in partial configuration and detailing, the AI system would have two analysis target system diagrams before and after the change. The system diagram before the change and the system diagram after the change are regarded as the previous version and the current version, respectively. In the execution of the ethical risk analysis again in response to a change of the AI system, an interaction changed between the previous version and the current version is regarded as a noteworthy significant interaction for the forthcoming re-analysis.

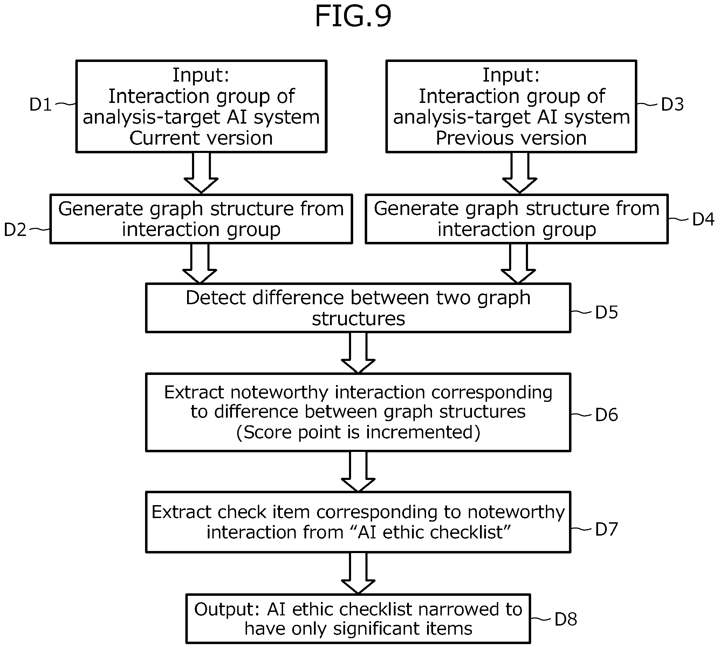

A process of generating an AI ethic checklist of an embodiment will now be described with reference to a flow diagram (Steps D1 to D8) of FIG. 9.

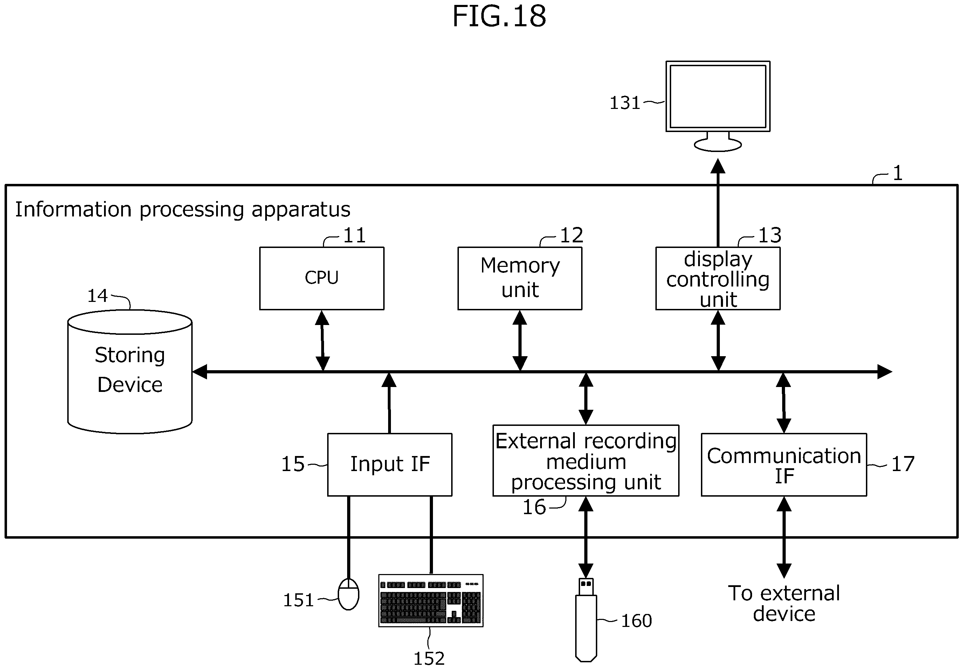

The system diagram of the current version of the AI system 100 (see FIG. 2) describes interactions between AI system components and stakeholders. A data format of the analysis sheet (see FIG. 4), i.e., a data format of "interaction group", obtained by extracting all the interactions from the system diagram of the current version is inputted into the information processing apparatus 1 (to be detailed below with reference to FIG. 18) of the present embodiment (Step D1).

A graph structure is generated from the interaction group of the current version (Step D2).

On the other hand, an interaction group of the system diagram of the previous version is also inputted into the information processing apparatus 1 (Step D3).

A graph structure is generated from the interaction group of the previous version (Step D4).

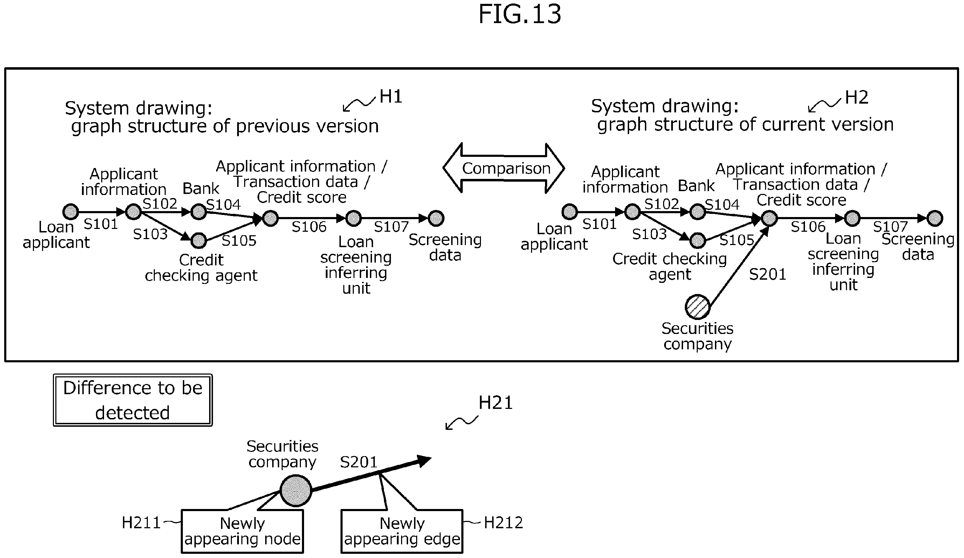

The two graph structures of the current version and the previous version are compared and the difference (change) is detected (Step D5). As a method of the difference detection, a rule registered in advance is used. Examples of the difference detection using a rule will be described below with reference to FIG. 13 to FIG. 16.

An interaction detected to be the difference is regarded and a score point of significance of the interaction is incremented (Step D6) .

The check item corresponding to a noteworthy (highly significant) interaction is extracted from the AI ethic checklist (Step D7).

Then, an AI ethic checklist narrowed to have only significant items is outputted (Step D8).

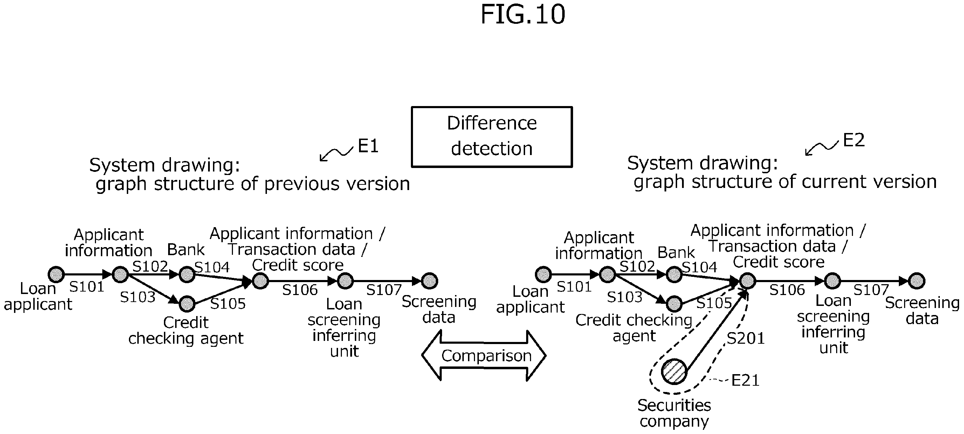

FIG. 10 is a diagram illustrating a first example of difference detecting process and a significance addition process of the embodiment.

The graph structure of the system diagram of the "previous version" indicated by the reference sign E1 and the graph structure of the system diagram of the "current version" indicated by the reference sign E2 are inputted into the information processing apparatus 1 and are compared.

In the system diagram of the "current version", the interaction S201 from the node "securities company" indicated by the reference sign E21 to the node "applicant information, transaction data, and credit score" is detected to be a different interaction.

Since the interaction ID may be renumbered in the course of updating of the diagram, the old ID in the previous version is not considered and a significant score is provided to an ID in a new diagram of the "current version". Since the graph structures are compared on the name basis of the nodes (e.g., "loan applicant"), the present embodiment assumes that node names match in the two system diagrams.

On the basis of the detected different interaction, a score point of significance of the interaction S201 is incremented.

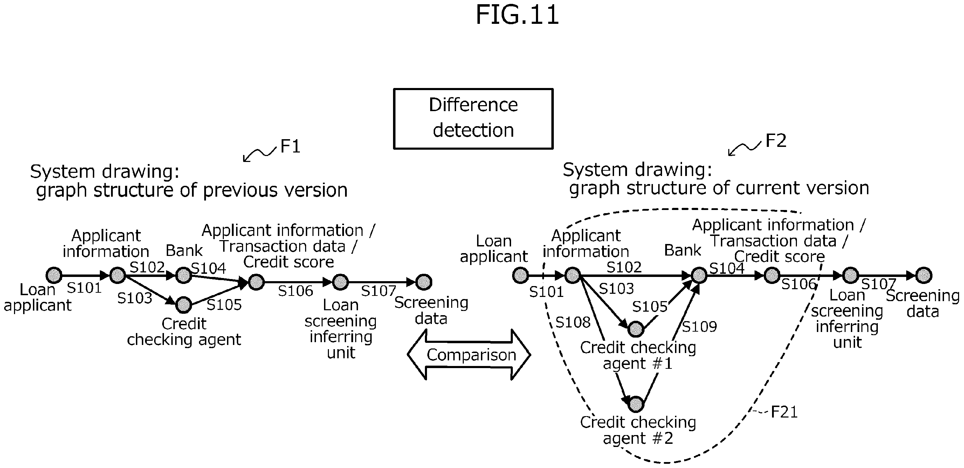

FIG. 11 is a diagram illustrating a second example of the difference detecting process and the significance addition process of the embodiment.

The graph structure of the system diagram of the "previous version" indicated by the reference sign F1 and the graph structure of the system diagram of the "current version" indicated by the reference sign F2 are inputted into the information processing apparatus 1 and are compared.

In the system diagram of the "current version", the interactions S102, S103, S104, S105, S106, S108, and S109 from the node "applicant information" indicated by reference sign F21 to the node "data collection, and preprocessing (applicant data)" are detected to be different interactions.

On the basis of the detection, score points of significance of the interactions S102, S103, S104, S105, S106, S108, and S109 are increased.

That is, in the example of FIG. 11, difference detection is conducted on not only newly added interactions S108 and S109 but also on a structure of a partial graph.

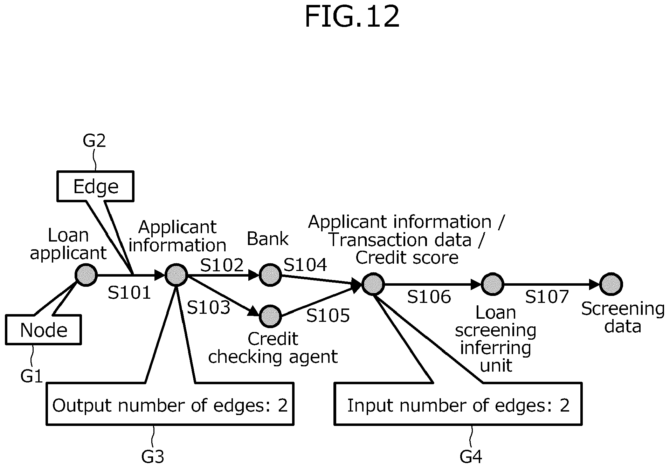

FIG. 12 is a diagram illustrating a graph structure.

The graph structure is illustrated by a relationship between nodes (see G1, see "white circles") and an edge (see G2, see "arrows") that connects nodes with each other. A node represents a stakeholder or an AI system component, and an edge represents an interaction. An edge has a direction (in other words, the direction of the arrow).

Each node is recorded with an output edge number representing the number of edges extending from the node and an input edge number representing the number of edges entering the node. The number of output edges of the node indicated by the reference sign G3 is "two" of the interactions S102 and S103, and the number of input edges of the node indicated by the reference sign G4 is "two" of the interactions S104 and S105.

FIG. 13 is a diagram illustrating a first specific example of the difference detecting process of the embodiment. An element condition (a preset difference extracting rule) to be detected as a difference may be appropriately set in view of the balance between the load required for analysis and completeness. Next, description will now be made in relation to an example of an element condition to be detected as a difference.

The graph structure of the system diagram of the "previous version" indicated by the reference sign H1 and the graph structure of the system diagram of the "current version" indicated by the reference sign H2 are inputted into the information processing apparatus 1 and are compared.

In the example of FIG. 13, the element conditions to be detected as differences are assumed to be:
- newly appearing node (in other words, a node with a new name)
- newly appearing edge (in other words, an edge linked to nodes at least one of which is newly added or has a name different from that of the node previously linked).

In this case, the elements detected as the differences of the graph structures indicated by the reference signs H1 and H2 are a node (i.e., newly appearing node indicated by the reference sign H211) of the securities company indicated by the reference sign H21 and an edge (i.e., newly appearing edge indicated by the reference sign H212) of S201 extending from the node of the securities company.

As a result, S201 is detected as a different interaction.

On the basis of the above, score points of significance of the significance of S201 is incremented.

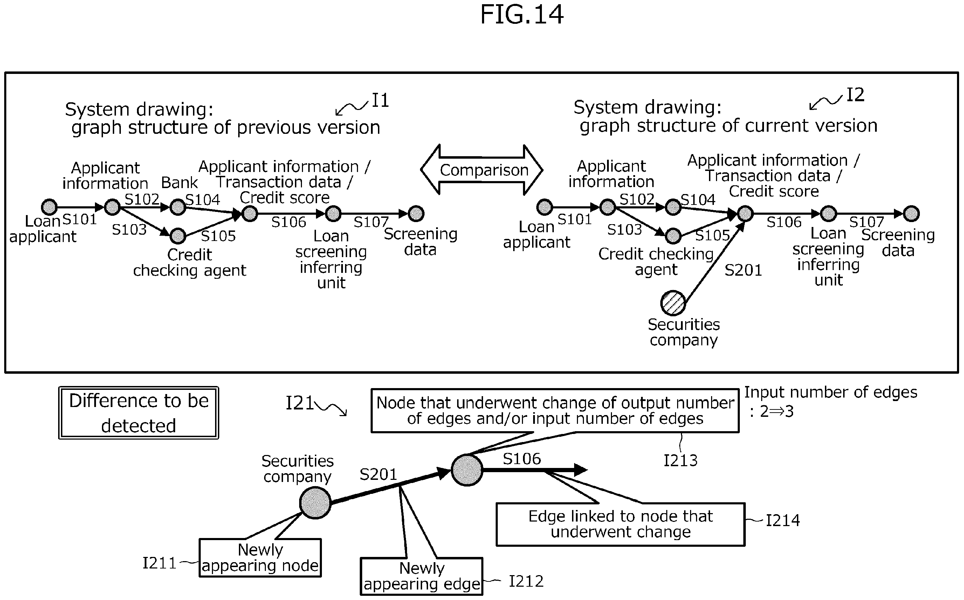

FIG. 14 is a diagram illustrating a second specific example of the difference detecting process of the embodiment. In this example, the graph structures to be compared are the same as those illustrated in FIG. 12, but the element conditions (difference extracting rule) to be detected as differences are different.

The graph structure of the system diagram of the "previous version" indicated by the reference sign I1 and the graph structure of the system diagram of the "current version" indicated by the reference sign I2 are inputted into the information processing apparatus 1 and are compared.

In the example of FIG. 14, the element conditions to be detected as differences are as follows:
- newly appearing node (in other words, a node with a new name)
- newly appearing edge (in other words, an edge linked to nodes at least one of which is newly added or has a name different from that of the node previously linked),
- node that underwent a change of the number of output edges and/or the number of input edges
- edge linked to node that underwent a change.

In this case, the elements detected as the differences of the graph structures indicated by the reference signs I1 and I2 are node (i.e., newly appearing node indicated by the reference sign 1211) of the securities company indicated by the reference sign I21 and an edge (i.e., newly appearing edge indicated by the reference sign 1212) of S201, the node (node that underwent a change of output edge number and/or input edge number indicated by the reference sign I213) of the applicant information, the transaction data, and the credit score, and the edge (the edge linked to node that underwent change indicated by the reference sign I214) of S106.

As a result, S201 and S106 are detected as the different interactions.

On the basis of the above, score points of significance of the significance of S201 and S106 are incremented.

Alternatively, the element condition to be detected as a difference may have a more detailed restriction. For example, as "an edge linked to node that underwent a change", an edge like the interaction S106 linked to nodes at the start and end points one of which undergoes a change is detected in the example of FIG. 13, but alternatively, "an edge linked to the nodes on the both ends that underwent changes" may be detected.

Further, "an edge linked to node that underwent a change" may be "an edge extending from a node that underwent a change".

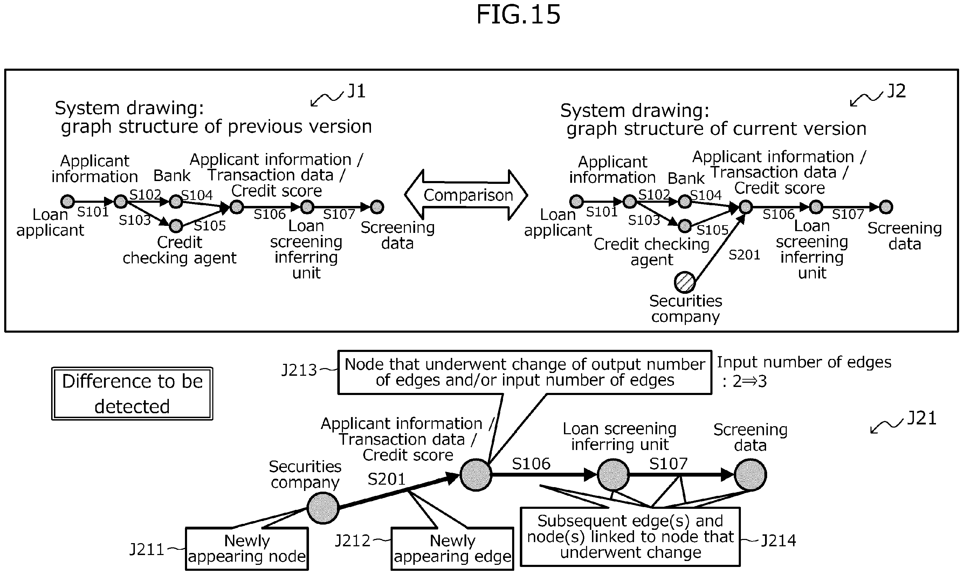

FIG. 15 is a diagram illustrating a third specific example of the difference detecting process of the embodiment. In this example, the graph structures to be compared are the same as those illustrated in FIGs. 13 and 14, but the element conditions (the difference extracting rule) to be detected as differences are further different.

The graph structure of the system diagram of the "previous version" indicated by the reference sign J1 and the graph structure of the system diagram of the "current version" indicated by the reference sign J2 are inputted into the information processing apparatus 1 and are compared.

In the example of FIG. 15, the element conditions to be detected as differences are assumed to be:
- newly appearing node (in other words, a node with a new name)
- newly appearing edge (in other words, an edge linked to nodes at least one of which is newly added or has a name different from that of the node previously linked)
- node that underwent a change of the number of output edges and/or the number of input edges
- subsequent edge(s) and node(s) linked to a node that underwent a change

In this case, the elements detected as the differences of the graph structures indicated by the reference signs J1 and I2 are a node (i.e., newly appearing node indicated by the reference sign J211) of the securities company indicated by the reference sign J21, an edge (i.e., newly appearing edge indicated by the reference sign J212) of S201, the node (node that underwent a change of output edge number and/or input edge number indicated by the reference sign J213) of the applicant information, the transaction data, and the credit score, the edge of S106, the node of the loan screening inferring unit, the edge of S107, and the node (subsequent edge(s) and node(s) linked to node that underwent change indicted by the reference sign J214) of the screening data.

As a result, S201, S106 and S107 are detected as the interactions of the differences.

Based on this, the importance of S201, S106 and S107 is added.

A detection priority may be assigned to a node and an edge to be detected. Specifically, a higher priority may be set to a node or an edge having a smaller hop number (which means a less edge number on the route) from the most downstream node "applicant information, transaction data, and credit score" that underwent a change.

Alternatively, a high priority may be provided to an upstream node or edge of the most downstream node "applicant information, transaction data, and credit score" that underwent a change. In the example illustrated in FIG. 15, the priorities of the edge S201 and the nodes "securities company" and the "applicant information, transaction data, and credit score" are set to be high.

Further, the priorities of a node and an edge each having a hop number "one" from the "applicant information, transaction data, and credit score" that underwent a change are set to be middle. In Example illustrated in FIG. 15, the priorities of the edge S106 and the node "loan screening inferring unit" are set to be middle.

Further, the priorities of a node and an edge each having a hop number two or more from the "applicant information, transaction data, and credit score" node that underwent a change are set to be low. In the example illustrated in FIG. 15, the priorities of the edge S107 and the node "screening data" are set to be low.

Then, according to the set detection priorities, the score points of an interaction significance to be incremented may be changed, e.g., three points for a high priority, two points for a middle priority, and one point to a low priority.

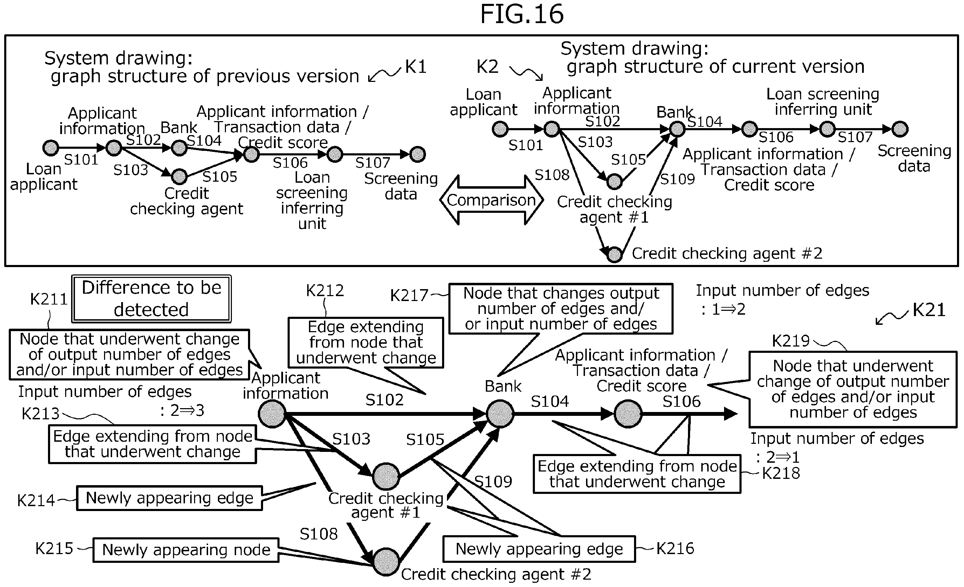

FIG. 16 is a diagram illustrating a fourth specific example of the difference detecting process of the embodiment. The fourth specific example to be described here is an example when the two graph structures to be compared are different from those described in FIGs. 13-15.

The graph structure of the system diagram of the "previous version" indicated by the reference sign K1 and the graph structure of the system diagram of the "current version" indicated by the reference sign K2 are inputted into the information processing apparatus 1 and are compared.

In the example of FIG. 16, the element conditions to be detected as differences are the same as those of FIG. 14 as follows:
- newly appearing node (in other words, a node with a new name)
- newly appearing edge (in other words, an edge linked to nodes at least one of which is newly added or has a name different from that of the node previously linked)
- node that underwent a change of the number of output edges and/or the number of input edges
- edge extending from node that underwent a change.

As illustrated in the reference sign K21, the element conditions detected as the difference are an "applicant information" node, a "bank" node, an "applicant information, transaction data, and credit score" node (node that underwent a change of the number of output edges and/or the number of input edges indicated by reference signs K211, K217, and K219), edges S102,S103,S104,S106 (edges extending from a node underwent a change indicated by reference signs K212, K213, and K218 ), edges S108, S105, and S109 (newly appearing edges indicated by the reference signs K214 and K216), and a "credit checking agency 2" node (a newly appearing node indicated by the reference sign K215).

As a result, S102, S103, S104, S106, S108, S105, and S109 are detected as the different interactions.

On the basis of the above, score points of significance of the significance of S102, S103, S104, S106, S108, S105, and S109 are incremented.

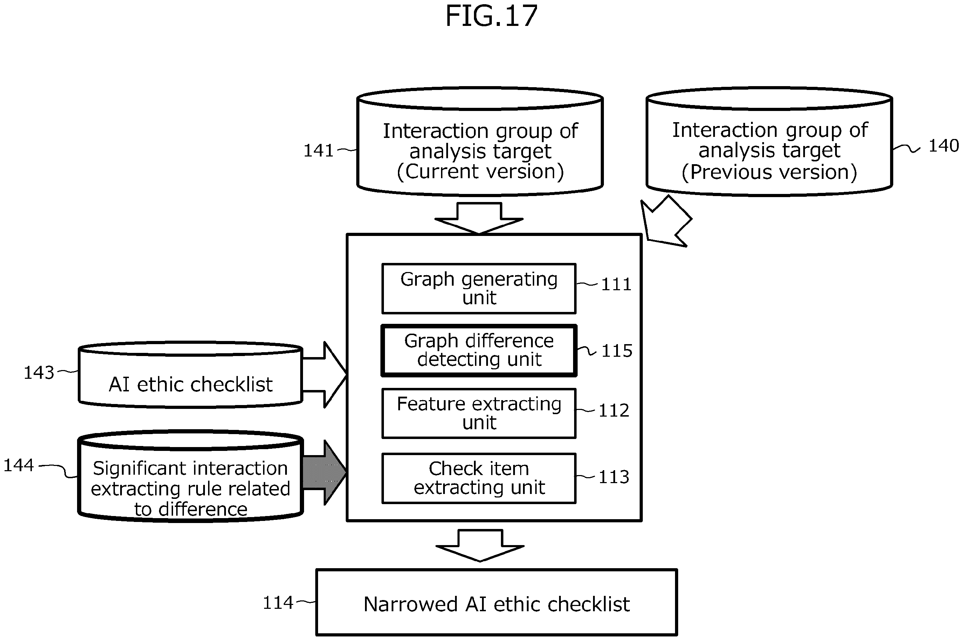

FIG. 17 is a diagram schematically illustrating an example of a software configuration of the information processing apparatus 1 of the embodiment.

The information processing apparatus 1 of the embodiment functions as a graph generating unit 111, a feature extracting unit 112, a check item extracting unit, and a graph difference detecting unit 115.

The graph generating unit 111 obtains multiple relationship information pieces (in other words, interactions) including at least two attributes among the attribute of the type of the target person, the attribute of the type of the process determined on the basis of the configuration of the AI system 100. The graph generating unit 111 may obtain the relationship information on the basis of the interaction group 141 of the current version (in other words, the first multiple relationship information information) of the analysis target and the interaction group 140 of the previous version (in other words, the second multiple relationship information information) of the analysis target. The graph generating unit 111 may generate the graph structure illustrated in FIGS. 10-16, for example, based on the obtained relationship information.

The graph difference detecting unit 115 compares the graph structure generated by the system diagram of the current version with the graph structure generated by the system diagram of the previous version, and detects the difference of the system diagrams. The graph difference detecting unit 115 may detect the difference based on significant interaction extracting rule 144 related to a difference.

The feature extracting unit 112 determines priorities of multiple relationship information based on the differences in the graph structures detected by graph difference detecting unit 115. The feature extracting unit 112 may determine the priorities based on the significant interaction extracting rule 144 related to a difference.

The check item extracting unit 113 outputs, as a narrowed AI ethic checklist 143 of the AI system 100, one or more check items selected on the basis of the priorities determined by the feature extracting unit 112 from among the multiple AI ethic check items associated with the respective attributes.

FIG. 18 is a diagram schematically illustrating an example of a hardware configuration of the information processing apparatus 1 of the embodiment.

As illustrated in FIG. 18, the information processing apparatus 1 includes a Central Processing Unit (CPU) 11, a memory unit 12, a display controlling unit 13, a storing device 14, an input IF 15, an external recording medium processing unit 16, and a communication IF 17.

The memory unit 12 is an example of a storing device, and is exemplified by a Read Only Memory (ROM) and a Random Access Memory (RAM). In the ROM of the memory unit 12, a program such as Basic Input/Output System (BIOS) may be written. The software program of the memory unit 12 may be appropriately read and executed by the CPU 11. The RAM of the memory unit 12 may be used as a temporary recording memory or a working memory.

The display controlling unit 13 is connected to a displaying device 131, and controls the displaying device 131. Examples of the displaying device 131 are a liquid crystal display, a Light-Emitting Diode (OLED) display, a Cathode Ray Tube (CRT), an electronic paper display, which displays various types of information to the operator or the like. The displaying device 131 may be combined with an input device and is exemplified by a touch panel. The displaying device 131 displays various types of information to the user of the information processing apparatus 1.

The storing device 14 is a high IO performance storing device and is exemplified by a Dynamic Random Access Memory (DRAM), a Solid State Drive (SSD), a Storage Class Memory (SCM), and a Hard Disk Drive (HDD).

The input IF 15 is connected to an input device such as a mouse 151 and a keyboard 152 and controls the input device such as the mouse 151 and the keyboard 152. The mouse 151 and the keyboard 152 are examples of an input device through which the operator makes various inputting operations.

The external recording medium processing unit 16 is configured to be capable of mounting a recording medium 160 thereon. The external recording medium processing unit 16 is configured to be capable of reading, in a state where the recording medium 160 is mounted thereon, the information recorded in the recording medium 160. In the present embodiment, the recording medium 160 is portable. Examples of the recording medium 160 is a flexible disc, an optical disc, a magnetic disc, a magneto-optical disc, and a semiconductor memory.

The communication IF 17 is an interface that makes the information processing apparatus 1 communicable with an external apparatus.

The CPU 11 is an example of a processor, and a processor device that carries out various controls and arithmetic operations. The CPU 11 achieves various functions by executing an Operating System (OS) and a program read in the memory unit 12. The CPU 11 may be a multiprocessor including multiple CPUs, a multi-core processor including multiple CPU cores, or a configuration including multiple multi-core processors.

The apparatus that controls the entire operation of the information processing apparatus 1 is not limited to the CPU 11, and may alternatively be any one of MPUs (Micro Processing Units), DSPs (Digital Signal Processors), ASICs (Application Specific Integrated Circuits), PLDs (Programmable Logic Devices), FPGAs (Field Programmable Gate Arrays), and may be a combination of two or more of the above.

### (C) Effect:

The machine learning program, the machine learning method, and the information processing apparatus 1 bring the following effects and advantages, for example.

The graph difference detecting unit 115 compares a first multiple relationship information with a second multiple relationship information pieces, the first multiple relationship information pieces being determined in terms of an inputted configuration of a first Artificial Intelligence (AI) system and each including multiple attributes, the second multiple relationship information pieces being determined in terms of a second AI system. The feature extracting unit 112 determines a priority of the first multiple relational information pieces on the basis of the result of the comparison. The check item extracting unit 113 outputs, as a narrowed AI ethic checklist 114 of the AI system, one or more check items selected according to the determined priorities from among multiple check items associated one with each of the multiple attributes.

This can help developers and providers of an AI system to appropriately recognize and deal with ethical risks that may arise from operation of the AI system. Specifically, the AI ethic check list can be prioritized and the efficiency for finding measures to deal with risks can be enhanced by preferentially analyzing an item having a higher priority in the checklist. In particular, when a risk analysis is to be executed again on an AI system that has undergone ethical risk analysis and also undergone change and detailing, the efficiency of the re-analysis can be largely enhanced.

The above case is exemplified by a case where omission of an interaction is found in the course of analysis of an AI ethical risk, and then the system diagram is corrected and the re-analysis is to be performed, and a case where a system diagram that was rough when introduction of an AI is to be examined comes to be detailed as the phase of the AI life cycle proceeds, which makes it possible to perform more detailed risk analysis. In the above cases, the present embodiment can preferentially recognize a risk to be newly extracted as a result of updating of the system diagram.

### (D) Miscellaneous:

The technique disclosed herein should by no means be limited to the foregoing embodiment. Various changes and modifications can be suggested without departing from the scope of the present embodiment. The configurations and the processes of the present embodiment may be appropriately selected, omitted, or combined according to the requirement.

### [Description Reference Signs]

1: information processing apparatus
2: credit checking agency
10: AI service provider
11: CPU
12: memory unit
13: display controlling unit
14: storing device
15: input IF
16: external recording medium processing unit
17: communication IF
20: data provider
30: data provider
40: user
100: AI system
101: training data
102: loan screening model training unit
103: loan screening model
104: inference data
105: inferring unit
106: screening result
110: training unit
111: graph generating unit
112: feature extracting unit
113: check item extracting unit
114: AI ethic checklist
115: graph difference detecting unit
120: predicting unit
131: displaying unit
140: interaction group
141: interaction group
142: significant interaction extracting rule
143: AI ethic checklist
144: significant interaction extracting rule
151: mouse
152: keyboard
160: recording medium

## Claims

1. A machine learning program executable by one or more computers, the machine learning program comprising:
an instruction for comparing a first plurality of relationship information pieces with a second plurality of relationship information pieces, the first plurality of relationship information pieces being determined in terms of an inputted configuration of a first Artificial Intelligence (AI) system and each including a plurality of attributes, the second plurality of relationship information pieces being determined in terms of a second AI system;
an instruction for determining priorities of the first plurality of relationship information pieces, the priorities being based on a result of the comparing; and
an instruction for outputting, as a checklist of the first AI system, one or more check items selected in accordance with the determined priorities from among a plurality of check items associated with the plurality of attributes.

2. The machine learning program according to claim 1, wherein
the comparing includes comparing a first graph structure of the first plurality of relationship information pieces with a second graph structure of the second plurality of relationship information pieces, and
the determining includes heightening a priority of a relationship information piece detected to have a difference from the second plurality of relationship information piece among the first plurality of relationship information.

3. The machine learning program according to claim 2, wherein the determining includes detecting, in the first graph structure of the first plurality of relationship information pieces, a node being included in the first AI system and not being included in the second AI system, and an edge being included in the first AI system and not being included in the second AI system and heightening priorities of the node and the edge.

4. The machine learning program according to claim 3, wherein the determining further includes detecting, as a difference from the second plurality of relationship information pieces, a node that undergoes a change of an output number or an input number and an edge linked to the node in the first graph structure of the first plurality of relationship information pieces, and heightening priorities of the node and the edge.

5. The machine learning program according to claim 4, wherein the determining further includes detecting, as a difference from the second plurality of relationship information pieces, a node that undergoes a change of an output number or an input number and an edge linked to the node in the first graph structure of the first plurality of relationship information pieces, and heightening priorities of the node and the edge.

6. The machine learning program according to claim 5, wherein the determining includes heightening priorities of the node and the edge by setting higher priorities to a node and an edge each having a less hop number from the node that undergoes the change among subsequent nodes and subsequent edges linked to an edge linked to the node that undergoes the change.

7. A computer-implemented machine learning method comprising:
comparing a first plurality of relationship information pieces with a second plurality of relationship information pieces, the first plurality of relationship information pieces being determined in terms of an inputted configuration of a first Artificial Intelligence (AI) system and each including a plurality of attributes, the second plurality of relationship information pieces being determined in terms of a second AI system;
determining priorities of the first plurality of relationship information pieces, the priorities being based on a result of the comparing; and
outputting, as a checklist of the first AI system, one or more check items selected in accordance with the determined priorities from among a plurality of check items associated with the plurality of attributes.

8. The computer-implemented machine learning method according to claim 7, wherein
the comparing includes comparing a first graph structure of the first plurality of relationship information pieces with a second graph structure of the second plurality of relationship information pieces, and
the determining includes heightening a priority of a relationship information piece detected to have a difference from the second plurality of relationship information piece among the first plurality of relationship information.

9. The computer-implemented machine learning method according to claim 8, wherein the determining includes detecting, in the first graph structure of the first plurality of relationship information pieces, a node being included in the first AI system and not being included in the second AI system, and an edge being included in the first AI system and not being included in the second AI system and heightening priorities of the node and the edge.

10. The computer-implemented machine learning method according to claim 9, wherein the determining further includes detecting, as a difference from the second plurality of relationship information pieces, a node that undergoes a change of an output number or an input number and an edge linked to the node in the first graph structure of the first plurality of relationship information pieces, and heightening priorities of the node and the edge.

11. The computer-implemented machine learning method according to claim 10, wherein the determining further includes detecting, as a difference from the second plurality of relationship information pieces, a node that undergoes a change of an output number or an input number and an edge linked to the node in the first graph structure of the first plurality of relationship information pieces, and heightening priorities of the node and the edge.

12. The computer-implemented machine learning method according to claim 11, wherein the determining includes heightening priorities of the node and the edge by setting higher priorities to a node and an edge each having a less hop number from the node that undergoes the change among subsequent nodes and subsequent edges linked to an edge linked to the node that undergoes the change.

13. An information processing apparatus comprising:
a processor (11) that
perform comparing a first plurality of relationship information pieces with a second plurality of relationship information pieces, the first plurality of relationship information pieces being determined in terms of an inputted configuration of a first Artificial Intelligence (AI) system and each including a plurality of attributes, the second plurality of relationship information pieces being determined in terms of a second AI system,
perform determining priorities of the first plurality of relationship information pieces, the priorities being based on a result of the comparing, and
perform outputting, as a checklist of the first AI system, one or more check items selected in accordance with the determined priorities from among a plurality of check items associated with the plurality of attributes.

14. The information processing apparatus according to claim 13, wherein
the comparing includes comparing a first graph structure of the first plurality of relationship information pieces with a second graph structure of the second plurality of relationship information pieces, and
the determining includes heightening a priority of a relationship information piece detected to have a difference from the second plurality of relationship information piece among the first plurality of relationship information.

15. The information processing apparatus according to claim 14, wherein the determining includes detecting, in the first graph structure of the first plurality of relationship information pieces, a node being included in the first AI system and not being included in the second AI system, and an edge being included in the first AI system and not being included in the second AI system and heightening priorities of the node and the edge.

16. The information processing apparatus according to claim 15, wherein the determining further includes detecting, as a difference from the second plurality of relationship information pieces, a node that undergoes a change of an output number or an input number and an edge linked to the node in the first graph structure of the first plurality of relationship information pieces, and heightening priorities of the node and the edge.

17. The information processing apparatus according to claim 16, wherein the determining further includes detecting, as a difference from the second plurality of relationship information pieces, a node that undergoes a change of an output number or an input number and an edge linked to the node in the first graph structure of the first plurality of relationship information pieces, and heightening priorities of the node and the edge.

18. The information processing apparatus according to claim 17, wherein the determining includes heightening priorities of the node and the edge by setting higher priorities to a node and an edge each having a less hop number from the node that undergoes the change among subsequent nodes and subsequent edges linked to an edge linked to the node that undergoes the change.
